# EUROPEAN PATENT SPECIFICATION

(11) **EP 0 898 845 B1**
(45) Date of publication and mention of the grant of the patent: **03.09.2003**
(21) Application number: 97920643.0
(22) Date of filing: 10.04.1997
(51) Int. Cl.: H04Q 7/22, H04Q 7/38

(54) **METHOD, SYSTEM AND APPARATUS FOR TRANSMITTING PACKET DATA VIA AN ADJACENT RADIO CELL**
VERFAHREN, SYSTEM UND VORRICHTUNG ZUR ÜBERTRAGUNG VON PACKETDATEN ÜBER EINE BENACHBARTE FUNKZELLE
PROCEDE, SYSTEME ET DISPOSITIF POUR TRANSMETTRE DES PAQUETS DE DONNEES VIA UNE CELLULE RADIO VOISINE

(30) Priority: 17.05.1996 GB 9610315
(43) Date of publication of application: 03.03.1999
(73) Proprietor: Motorola Limited, Basingstoke, Hampshire RG22 4PD (GB)
(72) Inventor: ROBINSON, William, Neil, F-78860 Saint Nom la Breteche (FR); WHINNETT, Nicholas, William, F-75004 Paris (FR); GIBBS, Jonathan, Alastair, Southampton, Hampshire SO30 2UL (GB)
(74) Representative: Potts, Susan Patricia
(86) International application number: EP9701782
(87) International publication number: WO97044968

(56) References cited:
- EP-A- 0 615 393
- WO-A-95/21492
- US-A- 4 831 373
- US-A- 5 396 539

## Description

### Field of the Invention

The present invention is generally related to communication devices and systems, and more particularly, to a method and apparatus for transmitting data in a wireless communication system.

### Background of the Invention

In many wireless communication systems, all of the resources of a cell can be in use at a point in time such that no additional calls can be made. This phenomenon, sometimes known as call blocking, can be very frustrating to the user wishing to make a call. Normally the user has to keep re-dialling until the cell has enough spare capacity to accept the new call. However, when one cell is operating at full capacity, the adjacent cells may have some spare capacity.

Future mobile public systems will carry a mixture of services, ranging from speech to video, short data, high speed circuit switched data and packet data. This is a much richer mixture of services than is generally found today and any call blocking will be the result of a much more complex mixture of services. Consequently, it will be harder to predict and efficiently provide additional capacity for future systems.

Examples of communication systems having a mixture of services can e.g. be found in US-A-5 396 539, US-A- 4 831 373 and EP-A-0 615 393.

US-A-5 396 539 describes a cellular telephone system which includes a packet-switched digital data communication system overlaying a circuit-switched communication subsystem with voice and data channels sharing the same channels. In this system individual circuit switched data channels may be reallocated for packet transmissions.

US-A- 4 831 373 describes a method of dynamically allocating a number of data channels in a communication system accommodating both switched circuit data and packet data. The method allows data channels to be reallocated as voice channels if the data traffic is low.

EP-A-0 615 393 describes a method for high speed packet data transmission on a conventional cellular voice network. The method assigns channels to be used as high speed packet channels and one channel to be used as a digital data control channel. Special high data rate phones examines the digital data control channel for an available data channel.

In a cellular system, the nominal edge of cell is usually described by the level of interfering energy in the operating frequency. The nominal edge of cell is also strongly influenced by the Forward Error Correction (FEC) techniques such as the interleaving, which has the effect of flattening and spreading out the interference peaks during the call. The nominal edge of cell is normally defined such that it is at the limit of the sensitivity required to maintain all of the services to be supported by the cell, including management and control signalling requirements. The nominal edge of cell is closely associated with the frequency re-use factor, which in turn is closely associated with the spectrum efficiency characteristics of the radio interface. Protocol features, such as FEC, error detection, guard times, power control are usually configured with the nominal edge of cell characteristics in mind, such that satisfactory service performance is achievable.

Some conventional communications systems use different modulation levels in order to maximise the throughput of data services, depending upon the carrier to interference ratio (C/I). Other conventional communications systems use umbrella cells overlaid on top of smaller microcells to increase capacity in a given geographical region at the cost of using more spectrum. Similarly, conventional communication systems use dynamic frequency allocations, where a spare radio frequency is moved from one cell to another in order to add local capacity to a cell that requires this extra capacity. However, this solution requires the additional frequency to be available. More importantly, such a frequency re-use is unlikely to be as efficient as the normal cellular fixed frequency assignments, and many often create difficult system management problems. Additionally, such systems often lead to inefficient use of spectrum. Also, not all services are subject to the same constraints.

Accordingly, there is a need for a method and apparatus for transmitting data efficiently in a wireless communication system.

There is also a need for a method and apparatus for transmitting data in an adjacent cell in a wireless communication system.

There is a further need for a method and apparatus for transmitting both delay constrained and delay unconstrained data efficiently in a wireless communication system.

### Brief Description of the Drawings

FIG. 1 is a plan view of a wireless communication system according to the present invention;
FIG. 2 is a block diagram of a mobile terminal according to the present invention;
FIG. 3 is a flow chart showing the call set-up procedure according to the present invention;
FIG. 4 is a flow chart showing the method for transmitting data according to the present invention; and
FIG. 5 is chart showing error information for data transmitted according to the present invention.

### Detailed Description of the Invention

The present invention provides a method and apparatus for exploiting the fundamentally different natures of packet switched and circuit switched services in order to balance the traffic load between a busy cell and nearby cells which have some spare capacity and operate on a different frequency than the busy cell. The invention can be employed almost instantaneously as the load changes from cell to cell and requires no additional frequencies.

One of the unique characteristics of mobile packet data services, both connectionless and connection oriented, is that the services are tolerant to an unpredictable end to end delay. By accommodating this unpredictable delay, it is possible to meet or exceed a guaranteed quality threshold and allow for routing changes within the system. Many applications for packet data ,such as email, are extremely flexible and can accommodate extremely long and unpredictable end to end delays. Most other mobile telecommunications services, such as voice, video and circuit switched data, require a virtually fixed delay, but can tolerate variable bit error rates to some extent. Removal of certain service constraints gives extra degrees of freedom when designing protocols, which in turn can be used to increase the overall capacity of the system with no additional hardware costs.

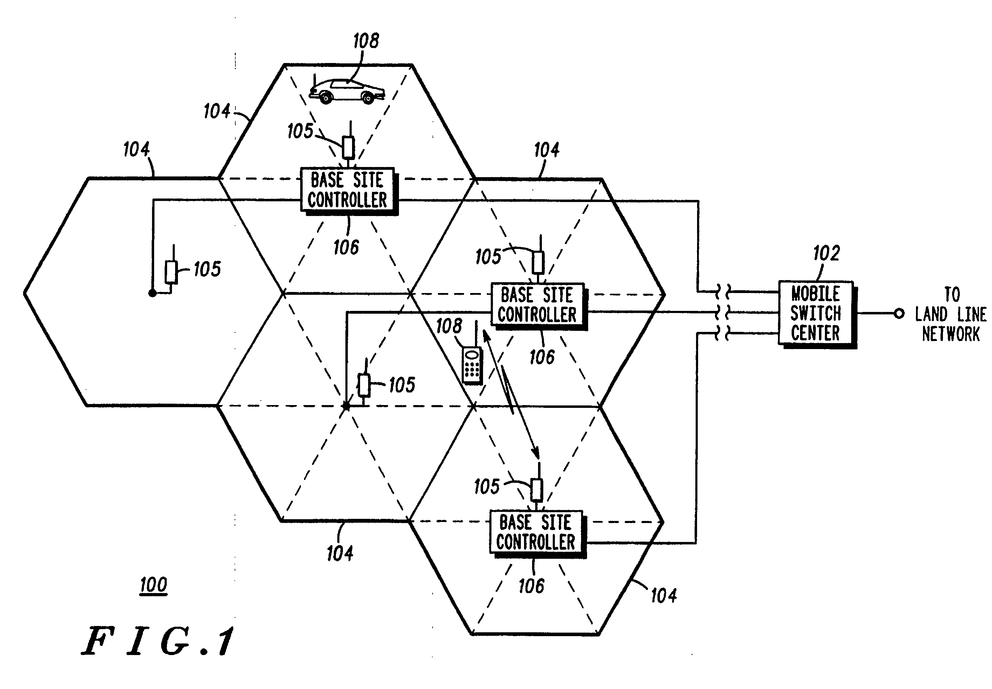

The present invention finds particular application where a busy cell is carrying a mixture of services which include a proportion of packet data services, and an adjacent cell on a different frequency has some spare capacity. In essence the nominal edge of cell for the adjacent cells with spare capacity is extended for packet data services. This extension is achieved by targeting the specific instances of packet data services which can accommodate an increase in delay, and deliberately slowing down the throughput of these targeted packet data services in order to allow the specific targeted packet data services to be transferred to the adjacent cell. By transmitting packet data on an adjacent cell, the communication system can maximise the capacity of the system, and avoid denying a request for service for which a local cell would not have the capacity. Turning now to FIG. 1, a wireless communication system 100 preferably includes a mobile switching centre 102, a plurality of cell sites 104 each having a base station 105 coupled to base site controllers 106. Each base station provides radio frequency (RF) coverage to a geographical region. Finally, a mobile communication device 108 or a portable communications device (collectively "mobile terminals") is adapted to communicate with a base station 105 associated with a base site controller 106 to maintain communications with another mobile terminal or a wireless unit associated with a landline system. Each base station 105 is assigned a predetermined set of channels according to a frequency reuse pattern which is well known in the art of cellular communication. The channels in each cell are generally divided into control channels which generally enable call set up, and traffic channels for transmitting voice or data traffic. The allocation and use of channels varies between communication systems, but are well known in the art.

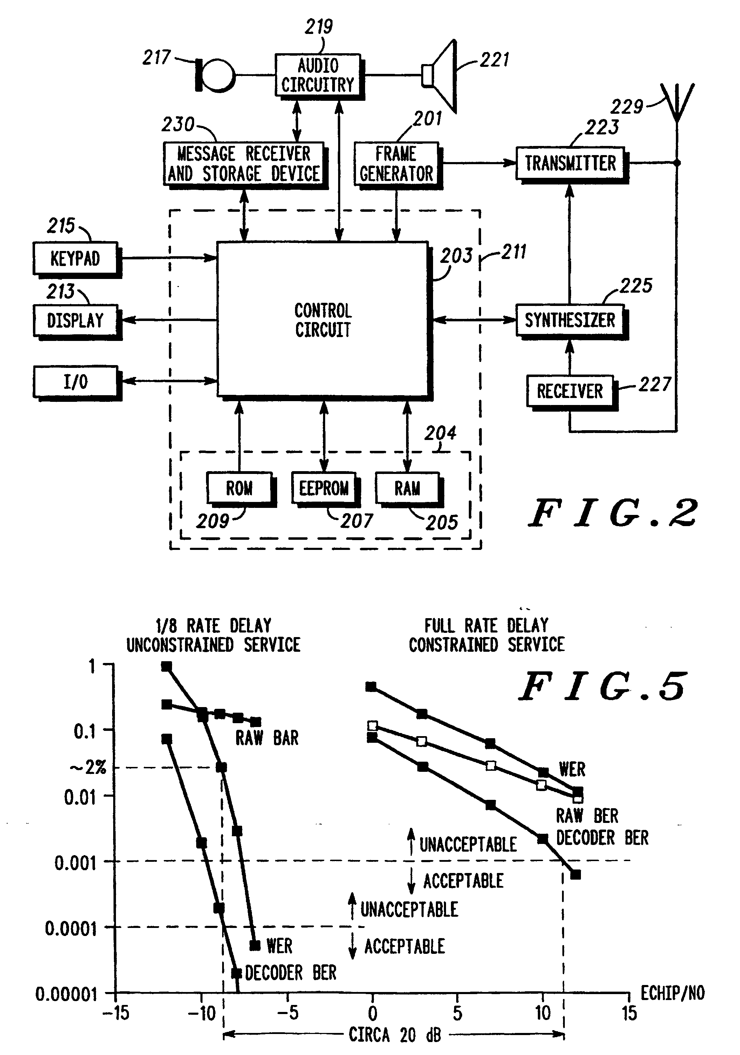

Turning now to FIG. 2, the mobile terminal 108, such as a cellular radiotelephone or other wireless communication device comprises an ASIC (Application Specific Integrated Circuit), such as a CMOS ASIC available from Motorola, Inc. and microprocessor 203, such as a 68HC11 microprocessor also available from Motorola, Inc., combine to generate the necessary communication protocol for operating in the communication system. The microprocessor 203 uses RAM 205, EEPROM 207, and ROM 209, consolidated in one package 211 in the preferred embodiment, to execute the steps necessary to generate the protocol and to perform other functions for the terminal 108, such as writing to a display 213, accepting information from a keypad 215, and controlling a frequency synthesizer 225. The ASIC 201 processes audio transformed by the audio circuitry 219 from a microphone 217 and to a speaker 221. Transmitter 223 transmits through an antenna 229 using carrier frequencies produced by the frequency synthesizer 225. Information received by the antenna 229 of the communication unit enters a receiver 227 which demodulates the symbols comprising a message frame using the carrier frequencies from the frequency synthesizer 225. The mobile terminal may optionally include a message receiver and storage device including digital signal processing means. The message receiver and storage device could be, for example, a digital answering machine or a paging receiver. While the circuitry of FIG. 2 shows an exemplary terminal, other circuitry could be employed within the scope of the present invention.

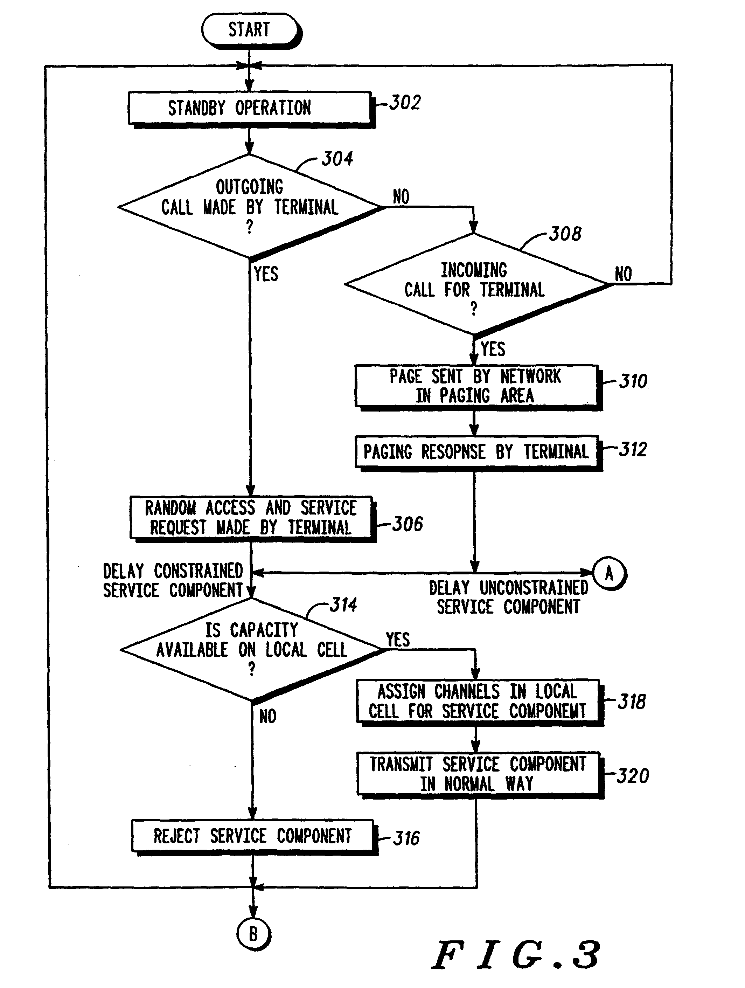

The steps for setting up a call will now be described with reference to FIG. 3.

In a step 302 terminal is in standby operation. The terminal then determines in a step 304 whether an outgoing call is made. If an outgoing call is made, random access and a service request is made by the terminal at a step 306 according to the system specification. If no outgoing call is made at step 304, the terminal determines whether an incoming call is detected at a step 308. If no incoming call is detected, the terminal continues standby operation at step 302. However, if an incoming call is detected, a page is sent by the system in the paging area at a step 310. Preferably, the paging area may include multiple cells as is well known in the art to increase spectrum efficiency. The terminal 108, 110 sends a paging response at a step 312 to receive the call.

The system then determines whether components of the service are delay constrained or delay unconstrained. Accordingly, the present invention finds particular applicability for a terminal adapted to simultaneously transmit delay constrained and delay unconstrained data, such as voice and data. If a component of the service is delay constrained, such as voice, video or high speed current switched data, the system determines whether there is capacity available on the local cell at a step 314. If there is no capacity, the system rejects the delay constrained service component at a step 316. If there is capacity available, the system then assigns traffic channels in the local cell to the terminal for the delay constrained service at a step 318. The delay constrained traffic is then transmitted in the normal fashion at a step 320.

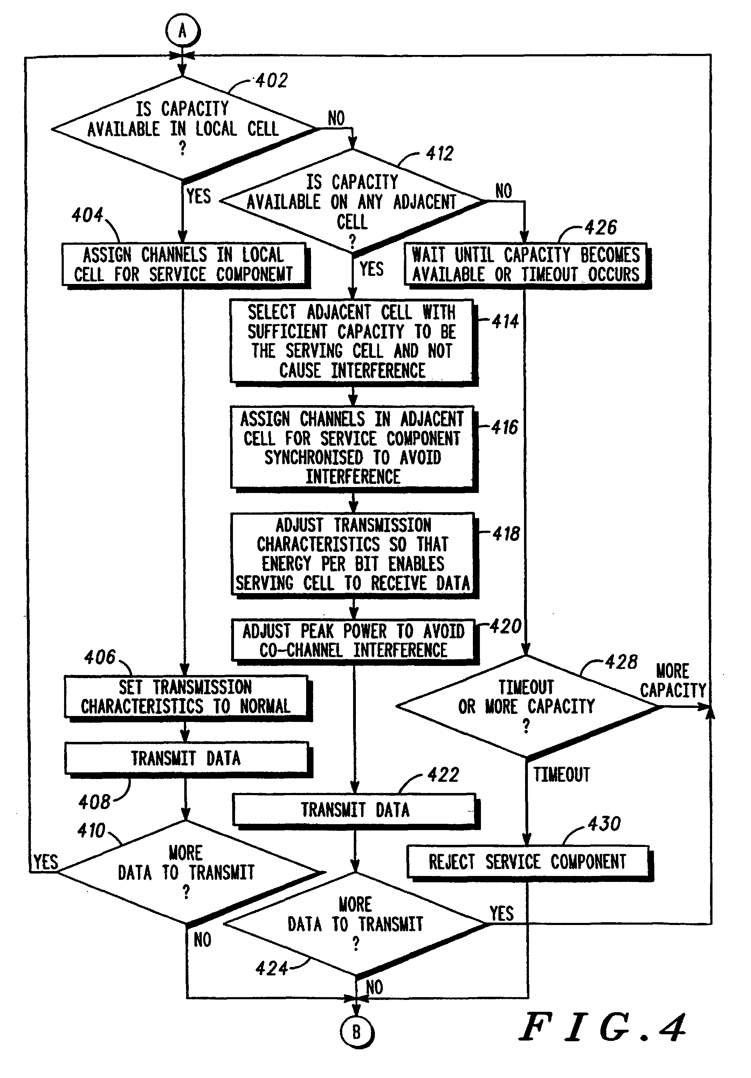

Turning now to FIG. 4, the preferred steps for transmitting delay unconstrained data, such as mobile packet data, on an adjacent cell will now be described. The delay unconstrained data could be transmitted alone, or simultaneously with any delay constrained data transmitted on frequencies in the local cell as described above. At a step 402, the network determines whether there is capacity available in the local cell. If there is capacity available, the system assigns channels in the local cell for the delay unconstrained service component at a step 404. The terminal 108, 110 then sets the transmission characteristics to normal at a step 406 and transfers the data at a step 408 according to conventional methods. If there is more data to transmit, at a step 410 the system determines whether capacity is available on the local cell at step 402. If there is no more data to transmit, the terminal returns to standby operation at step 302 of FIG. 3.

If there is no capacity available on the local cell at step 402, the system determines whether there is capacity available on any adjacent cell at step 412 by monitoring activity on channels of the adjacent cells for a predetermined period of time. If there is capacity available, the system selects an adjacent cell of sufficient capacity to be the serving cell and not cause interference in the system at a step 414. The system then assigns channels in the adjacent cell for the delay unconstrained data synchronised to avoid interference at a step 416. The terminal 108, 110 or the base station 105 in the adjacent cell then adjusts transmission characteristics so that the energy per bit enables the other terminal 108, 110 or base station 105 to receive data at a step 418.

Although there are a number of means of slowing down the targeted packet data services, the preferred method is to increase the energy per bit or symbol while not increasing the peak power. Some exemplary techniques of achieving this include reducing the modulation rate (i.e. symbol rate), moving to a modulation with fewer levels (e.g. 16 QAM to QPSK), increasing the FEC overhead and/or spread spectrum, spreading factor (i.e. more redundancy), or increasing the interleaving depth (i.e. spreading the interference more widely). One or more of the above specific techniques can be applied in combination with a change in frequency to the frequency of the adjacent cell. However, it is important not to increase the peak power, since the peak power will determine the level of interference into another cell where the same frequency is being re-used.

As the nominal edge of cell will have been effectively extended for the packet data services, it is likely that some of the terminals 108, 110 transmitting data according to the present invention will be closer than normal to a remote cell which is re-using the same frequency. Accordingly, the terminal 108, 110 also adjusts power to avoid co-channel interference at a step 420 to transmit data at a step 422. The peak power of the terminal 108, 110 when transmitting must in fact be lowered in proportion to the interference generated at that remote cell. This requires the addition of still further delay to the delay unconstrained service in order to maintain the required energy per bit/symbol at the serving base station 105. However, since the service will have been specifically targeted as being able to accommodate the longer delays, such a further delay should not cause a problem for the user. Note that this reduction in peak power is related to the well known "near-far" effect and is only applicable to transmissions from the terminal 108, 110, not the base station 105. Notably, the relative reduction in separation distance can be minimised and controlled by only allowing the packet data service to be transferred to an adjacent cell where there is a 7 cell re-use pattern or greater. Any reduction may not be necessary if the frequency is in fact not re-used nearby.

Additionally, if the reduction in the separation distance still has the capability to cause interference in the cell which is re-using the frequency, even after the reduction in transmit power has been taken into account, the following further mitigation technique may be applicable. If the adjacent cell experiencing interference("the victim cell") is also lightly loaded, it will be possible to schedule the transmissions of the interfering terminal such that it only transmits during periods of time when there are no active terminal being served by the victim base station, thus isolating any remaining potential interference in the time domain. When the packet data service has been transferred to an adjacent cell, the mobility management of the system may have to distinguish the location of the user in terms of service type. For example, incoming data packets will be routed to a different cell than incoming speech calls.

In a further aspect of the invention, in order to provide efficient means of indicating incoming traffic, and indeed as a further means of load balancing, the paging and access channels for all services may reside on the adjacent cells. This would enable a terminal or handset to monitor only one paging channel, and would relieve signalling burden from congested cells.

The terminal 108, 110 then determines whether there is more data to transfer in a step 424. If there is more data to transfer, the system determines whether there is capacity available on the local cell at step 402. Otherwise, the terminal returns to standby mode.

If there is no capacity available on the adjacent cell at step 412, the system waits until capacity becomes available or a time out occurs at a step 426. If more capacity becomes available at a step 428, the terminal determines whether the capacity is available on the local cell at step 402. If a time out expires before capacity becomes available, the system rejects the service component at a step 430 and returns to standby mode.

Turning now to FIG. 5, a chart shows the error rate (expressed as a bit error rate (BER) or word error rate (WER)) in a system transmitting both delay constrained and delay unconstrained data. Delay constrained services are generally concerned with BER, while packet data is generally concerned with WER. As can be seen from the chart, the acceptable threshold for error in full data rate delay constrained service, such as voice, is higher than for the rate in delay unconstrained service, such as e-mail. The energy per bit noise may be lower for the one-eighth rate delay unconstrained service. If there is no co-channel interference, there may be no need to reduce the energy per bit. In a cellular system as shown in FIG. 1, the maximum range has to approximately double. In order for a base station in a surrounding tier of cells to support a user in the nominal coverage area of the centre cell. Tripling the distance will allow some users in the central cell to communicate with more distant cells. In considering the control of co-channel interference, as discussed above, it can be seen from FIG. 1 that in a representative case the separation distance is potentially reduced by 2/3. In practice this potential reduction in separation will depend on reuse pattern etc., and can be mitigated by reduction in energy per bit, as described previously.

In order to calculate the necessary increase in energy per-bit or symbol, the communications range is tripled, the propagation path loss is based upon the 3.5 power law, and the potential reduction separation distance is 2/3. Tripling the range requires 3^{3.5} = 46.7 = 16.7 dB increase in energy per bit, while the reduction in RF power to control cochannel interference will require a 6.2 dB further improvement in sensitivity, requiring a total system gain of 22.9 dB. This is the gain between operating point of the delay constrained service and the operating point of the delay unconstrained service. Note that in this example, the reduction in transmit power of 6.2dB is incorporated into the overall solution in order to wholly compensate for the potential reduction in separation distance to a co-channel cell. To show that gains of this magnitude are achievable, a simulation of a digital radio link was performed. The nominal cell range is assumed to be dictated by some delay constrained service such as speech. This delay constrained service used pi/4 DQPSK modulation with 1/2 rate convolutional coding and interleaving over about 10 ms. As shown in FIG. 5, the system required Eb/No of about 12 dB for a decoded bit error rate of 0.001 (which is generally considered adequate for speech services, e.g. for UMTS).

A combination of increased coding redundancy, increased interleaving and spread spectrum were used to realize the required system gain. The combination of spreading factor and increased coding was chosen such that the same modulation symbol rate was maintained over the air as before. This has implementation advantages such as using the same clocks, filters etc. Specifically, the information rate was reduced to 1/8 of the full rate service, the coding was increased to 1/4 rate, a spreading factor of 4 was introduced, and the interleaving depth was increased to about 700 ms. A decoded WER of <2% was achieved at about -9 dB Ec/No (Ec = Energy per chip, chip rate = bit rate of full rate service, so the comparison is correct). Note that the 2% decoded WER threshold was chosen to give suitably low packet (retransmission rates. This corresponds to a system gain of about 20 dB which is close to the 22.9 dB identified above. Extra coding or interleaving would allow the 22.9 dB figure to be met or exceeded with ease. An extra layer of low redundancy coding would be particularly effective.

In summary, the present invention provides a method and apparatus which optimizes the traffic load between a busy cell and nearby cells which have some spare capacity. In particular, the invention exploits the fundamentally different nature of packet switched and circuit switched services. Unlike most mobile telecommunications services, such as voice, video and circuit switched data which require a virtually fixed delay, mobile packet data services, such as email, are tolerant to an unpredictable end to end delay. It is possible to meet or exceed a guaranteed quality threshold and allow for routing changes within the system by accommodating this unpredictable delay. In essence the nominal edge of cell for the adjacent cells with spare capacity is extended for packet data services only. This extension is preferably achieved by deliberately slowing down the throughput of these targeted packet data services in order to allow the specific targeted packet data services to be transferred to the adjacent cell.

## Claims

1. A method for maximizing the capacity of a system capable of transmitting data in a wireless communication system (100) having a plurality of cells (104), each cell (104) having a set of channels assigned thereto, said method comprising the steps of:
determining whether the data to be transmitted is delay unconstrained data;
accessing (414, 416) from a local cell a channel in an adjacent cell assigned for transmitting data; and **characterized by**
transmitting (422) said delay unconstrained data on said channel in said adjacent cell from or to a wireless communication device (108) in said local cell.

2. A method according to Claim 1, further including the steps of increasing the energy per bit of the delay unconstrained data transmitted (418); and maintaining the peak power of the delay unconstrained data transmitted (420).

3. A method according to Claim 1, wherein said step of increasing the energy per bit comprises slowing down the throughput of the delay unconstrained data.

4. A method according to Claim 1, wherein said step (422) of transmitting said data on said channel in said adjacent cell from the wireless communication device (108) in said local cell comprises transmitting the delay unconstrained data from a base station (105) in an adjacent cell to the wireless communication device in the local cell.

5. A method according to Claim 1, wherein said step of transmitting said data on said channel in said adjacent cell from the wireless communication device (108) in said local cell comprises transmitting the delay unconstrained data from the wireless communication device in the local cell to a base station in said adjacent cell.

6. A method according to Claim 5, further including a step of decreasing the peak power of the delay unconstrained data transmitted from or to said wireless communication device.

7. A method according to Claim 6, wherein said step of transmitting said data on said channel in said adjacent cell from the wireless communication device (108) in said local cell comprises transmitting the delay unconstrained data from a base station (105) in a local cell to a wireless communication device in said adjacent cell.

8. A communication device (108) adapted to transmit data in a communication system (100), said communication device (108) comprising:
a receiver (227) for receiving communication signals from said communication system (100);
means for determining whether the data to be transmitted is delay unconstrained data;
a transmitter (223)for transmitting said delay unconstrained data; and
control means (203) coupled to said transmitter for controlling the transmission of data in said communication system **characterised in that** the control means are arranged to transmit said delay unconstrained data on channels of a cell adjacent to the local cell of the communication device.

9. A communication device (108) according to Claim 8, further comprising:
means (203) for increasing the energy per bit of the delay unconstrained data transmitted from said wireless communication device; and
means (203) for maintaining the peak power of the delay unconstrained data transmitted from said communication device.

10. A communication device according to Claim 9, wherein said means (203) for increasing energy per bit comprises means for slowing down the throughput of the delay unconstrained data .

11. A communication device (108) according to Claim 10, wherein said means for slowing down the throughput of the delay unconstrained data comprises means for reducing a modulation rate.

12. A communication device (108) according to Claim 10, wherein said means for slowing down the throughput of the delay unconstrained data comprises means for changing a modulation technique.

13. A communication device (108) according to Claim 10, wherein said means for slowing down the throughput of the delay unconstrained data comprises means for increasing a FEC overhead.

14. A communication device (108) according to Claim 10, wherein said means for slowing down the throughput of the delay unconstrained data comprises means for increasing a spread spectrum spreading factor.

15. A communication device (108) according to any one of Claims 10 to 14, wherein said step of slowing down the throughput of the delay unconstrained data comprises means for increasing an interleaving depth.

16. A communication system (100) adapted to transmit data comprising:
a remote wireless communication device (108) having a transmitter (223) and a wireless communication device controller (203);
a plurality of base stations (105), each of said base station (105) being located in a cell (104) of said communication system (100) and having means for determining whether the data to be transmitted is delay unconstrained data and means for transmitting said delay unconstrained data to the remote wireless communication device (108); and
a network controller (106) coupled to said plurality of base stations for controlling the transmission of data in said communication system; and
**characterized by** the network controller (106) being arranged to transmit said delay unconstrained data using channels of a base station (105) in an adjacent cell to the local cell of the remote wireless communication device (108).

17. A communication system (100) according to Claim 16, wherein said wireless communication device controller (203) is arranged to increase the energy per bit of the delay unconstrained data transmitted from said wireless communication device in said local cell to a selected adjacent cell while maintaining the peak power of the delay unconstrained data transmitted from said wireless communication device.

18. A communication system according to Claim 16, wherein each said base station has a transmitter and a base station controller, said base station controller increasing the energy per bit of the delay unconstrained data transmitted from said base station to said remote wireless communication device while maintaining the peak power of the delay unconstrained data transmitted from said base station.

19. A communication system according to Claim 16, wherein said wireless communication device controller comprises means for slowing down the throughput of the delay unconstrained data.

20. A communication system according to Claim 19, wherein said wireless communication device controller comprises means for reducing a modulation rate.

21. A communication system according to Claim 19, wherein said wireless communication device controller comprises means for changing a modulation technique.

22. A communication system according to Claim 19, wherein said wireless communication device controller comprises means for increasing a FEC overhead.

23. A communication system according to Claim 19, wherein said wireless communication device controller comprises means for increasing a spread spectrum spreading factor.

24. A communication system according to any one of Claims 20 to 23, wherein said wireless communication device controller comprises means for increasing an interleaving depth.

## Patentansprüche

1. Verfahren zur Maximierung der Kapazität eines Systems, das in der Lage ist, Daten in einem eine Vielzahl von Zellen (104) aufweisenden kabellosen Kommunikationssystem (100) zu übertragen, wobei jede Zelle (104) einen ihr zugewiesenen Satz von Kanälen aufweist und das Verfahren die Schritte aufweist:
Bestimmen, ob die zu übertragenden Daten verzögerungsunbeschränkte Daten sind;
Zugreifen (414, 416) von einer lokalen Zelle auf einen Kanal in einer benachbarten Zelle, der der Datenübertragung zugewiesen ist; und **gekennzeichnet durch**
Übertragen (422) der verzögerungsunbeschränkten Daten auf dem Kanal in der benachbarten Zelle von oder zu einem kabellosen Kommunikationsgerät (108) in der lokalen Zelle.

2. Verfahren nach Anspruch 1, das weiterhin die Schritte des Anhebens der Energie pro Bit der übertragenen verzögerungsunbeschränkten Daten (418) und des Aufrechterhaltens der Leistungsspitze der übertragenen verzögerungsunbeschränkten Daten (420) umfasst.

3. Verfahren nach Anspruch 1, wobei der Schritt des Anhebens der Energie pro Bit das Verlangsamen des Datendurchsatzes der verzögerungsunbeschränkten Daten umfasst.

4. Verfahren nach Anspruch 1, wobei der Schritt (422) des Übertragens der Daten auf dem Kanal in der benachbarten Zelle von dem kabellosen Kommunikationsgerät (108) in der lokalen Zelle das Übertragen der verzögerungsunbeschränkten Daten von einer Basisstation (105) in einer benachbarten Zelle zu dem kabellosen Kommunikationsgerät in der lokalen Zelle umfasst.

5. Verfahren nach Anspruch 1, wobei der Schritt des Übertragens der Daten auf dem Kanal in der benachbarten Zelle von dem kabellosen Kommunikationsgerät (108) in der lokalen Zelle das Übertragen der verzögerungsunbeschränkten Daten von dem kabellosen Kommunikationsgerät in der lokalen Zelle zu einer Basisstation in der benachbarten Zelle umfasst.

6. Verfahren nach Anspruch 5, das weiterhin einen Schritt der Absenkung der Leistungsspitze der von oder zu dem kabellosen Kommunikationsgerät übertragenen verzögerungsunbeschränkten Daten umfasst.

7. Verfahren nach Anspruch 6, wobei der Schritt des Übertragens der Daten auf dem Kanal in der benachbarten Zelle von dem kabellosen Kommunikationsgerät (108) in der lokalen Zelle das Übertragen der verzögerungsunbeschränkten Daten von einer Basisstation (105) in einer lokalen Zelle zu einem kabellosen Kommunikationsgerät in der benachbarten Zelle umfasst.

8. Kommunikationsgerät (108), das geeignet ist, Daten in einem Kommunikationssystem (100) zu übertragen, wobei das Kommunikationsgerät (108) aufweist:
einen Empfänger (227) zum Empfangen von Kommunikationssignalen von dem Kommunikationssystem (100);
Mittel zum Bestimmen, ob die zu übertragenden Daten verzögerungsunbeschränkte Daten sind;
einen Sender (223) zum Übertragen der verzögerungsunbeschränkten Daten; und
Steuermittel (203), die mit dem Sender zur Steuerung der Datenübertragung in dem Kommunikationssystem gekoppelt sind, **dadurch gekennzeichnet, dass** die Steuermittel angeordnet sind, um die verzögerungsunbeschränkten Daten auf den Kanälen einer zu der lokalen Zelle des Kommunikationsgerätes benachbarten Zelle zu übertragen.

9. Kommunikationsgerät (108) nach Anspruch 8, weiterhin aufweisend:
Mittel (203) zum Anheben der Energie pro Bit der von dem kabellosen Kommunikationsgerät übertragenen verzögerungsunbeschränkten Daten; und
Mittel (203) zum Aufrechterhalten der Leistungsspitze der von dem Kommunikationsgerät übertragenen verzögerungsunbeschränkten Daten.

10. Kommunikationsgerät nach Anspruch 9, wobei die Mittel (203) zum Anheben der Energie pro Bit Mittel zum Verlangsamen des Durchsatzes der verzögerungsunbeschränkten Daten umfassen.

11. Kommunikationsgerät (108) nach Anspruch 10, wobei die Mittel zum Verlangsamen des Durchsatzes der verzögerungsunbeschränkten Daten Mittel zum Reduzieren einer Modulationsrate umfassen.

12. Kommunikationsgerät (108) nach Anspruch 10, wobei die Mittel zum Verlangsamen des Durchsatzes der verzögerungsunbeschränkten Daten Mittel zum Ändern einer Modulationstechnik umfassen.

13. Kommunikationsgerät (108) nach Anspruch 10, wobei die Mittel zum Verlangsamen des Durchsatzes der verzögerungsunbeschränkten Daten Mittel zum Vergrößern eines FEC-Overhead umfassen.

14. Kommunikationsgerät (108) nach Anspruch 10, wobei die Mittel zum Verlangsamen des Durchsatzes der verzögerungsunbeschränkten Daten Mittel zum Vergrößern eines Spreizfaktors eines Spreizspektrums umfassen.

15. Kommunikationsgerät (108) nach einem der Ansprüche 10 bis 14, wobei der Schritt des Verlangsamens des Durchsatzes der verzögerungsunbeschränkten Daten Mittel zum Vergrößern einer Verschachtelungstiefe ("interleaving depth") umfasst.

16. Kommunikationssystem (100), das zur Übertragung von Daten geeignet ist, welches aufweist:
ein entferntes kabelloses Kommunikationsgerät (108), das einen Sender (223) und eine Steuerung (203) für ein kabelloses Kommunikationsgerät aufweist;
eine Vielzahl von Basisstationen (105), wobei jede der Basisstationen (105) in einer Zelle (104) des Kommunikationssystems (100) angeordnet ist, und Mittel zum Bestimmen, ob die zu übertragenden Daten verzögerungsunbeschränkte Daten sind, und Mittel zum Übertragen der verzögerungsunbeschränkten Daten zu dem entfernten kabellosen Kommunikationsgerät (108) aufweist; und
eine Netzwerksteuerung (106), die mit der Vielzahl von Basisstationen zur Steuerung der Datenübertragung in dem Kommunikationssystem gekoppelt ist, und
**dadurch gekennzeichnet, dass** die Netzwerksteuerung (106) angeordnet ist, um die verzögerungsunbeschränkten Daten unter Verwendung der Kanäle einer Basisstation (105) in einer zu der lokalen Zelle des entfernten kabellosen Kommunikationsgerätes (108) benachbarten Zelle zu senden.

17. Kommunikationssystem (100) nach Anspruch 16, wobei die Steuerung (203) für ein kabelloses Kommunikationsgerät angeordnet ist, um die Energie pro Bit der von dem kabellosen Kommunikationsgerät in der lokalen Zelle zu einer ausgewählten benachbarten Zelle gesendeten verzögerungsunbeschränkten Daten anzuheben, während die Leistungsspitze der von dem kabellosen Kommunikationsgerät gesendeten verzögerungsunbeschränkten Daten aufrechterhalten wird.

18. Kommunikationssystem nach Anspruch 16, wobei jede Basisstation einen Sender und eine Basisstationssteuerung aufweist, wobei die Basisstationsteuerung die Energie pro Bit des von der Basisstation zu dem entfernten kabellosen Kommunikationsgerät gesendeten verzögerungsunbeschränkten Daten anhebt, während es die Leistungsspitze der von der Basisstation gesendeten verzögerungsunbeschränkten Daten aufrechterhält.

19. Kommunikationssystem nach Anspruch 16, wobei die Steuerung eines kabellosen Kommunikationsgerätes Mittel zum Verlangsamen des Durchsatzes der verzögerungsunbeschränkten Daten umfasst.

20. Kommunikationssystem nach Anspruch 19, wobei die Steuerung eines kabellosen Kommunikationsgerätes Mittel zum Reduzieren einer Modulationsrate umfasst.

21. Kommunikationssystem nach Anspruch 19, wobei die Steuerung eines kabellosen Kommunikationsgerätes Mittel zum Ändern einer Modulationstechnik umfasst.

22. Kommunikationssystem nach Anspruch 19, wobei die Steuerung eines kabellosen Kommunikationsgerätes Mittel zum Steigern eines FEC-Overheads umfasst.

23. Kommunikationssystem nach Anspruch 19, wobei die Steuerung eines kabellosen Kommunikationsgerätes Mittel zum Vergrößern eines Spreizfaktors eines Spreizspektrums umfasst.

24. Kommunikationssystem nach einem der Ansprüche 20 bis 23, wobei die Steuerung eines kabellosen Kommunikationsgerätes Mittel zum Vergrößern einer Verschachtelungsstiefe umfasst.

## Revendications

1. Procédé permettant de maximiser la capacité d'un système pouvant émettre des données dans un système de télécommunications sans fil (100) qui possède une pluralité de cellules (104), chaque cellule s'étant vu attribuer un ensemble de canaux, ledit procédé comprenant les opérations suivantes :
déterminer si les données à transmettre sont des données du type sans contraintes de retard ; et
faire accès (414, 416) depuis une cellule locale, à un canal d'une cellule adjacente affectée à la transmission de données ;
**caractérisé en ce qu'**il comprend l'opération consistant à transmettre (422) lesdites données du type sans contraintes de retard sur ledit canal de ladite cellule adjacente en provenance ou à destination d'un dispositif de télécommunications sans fil (108) de ladite cellule locale.

2. Procédé selon la revendication 1, comportant en outre les opérations consistant à augmenter l'énergie par bit des données du type sans contraintes de retard émises (418); et maintenir la puissance de crête des données du type sans contraintes de retard émises (420).

3. Procédé selon la revendication 1, où ladite opération d'augmentation de l'énergie par bit comprend le ralentissement du débit des données de type sans contraintes de retard.

4. Procédé selon la revendication 1, où ladite opération (422) de transmission desdites données sur ledit canal de ladite cellule adjacente en provenance du dispositif de télécommunications sans fil (108) de ladite cellule locale comprend la transmission des données du type sans contraintes de retard depuis une station de base (105) d'une cellule adjacente à destination du dispositif de télécommunications sans fil de la cellule locale.

5. Procédé selon la revendication 1, où ladite opération de transmission desdites données sur ledit canal de ladite cellule adjacente en provenance du dispositif de télécommunications sans fil (108) de ladite cellule locale comprend la transmission des données du type sans contraintes de retard depuis le dispositif de télécommunications sans fil de la cellule locale à une station de base de ladite cellule adjacente.

6. Procédé selon la revendication 5, comportant en outre l'opération qui consiste à diminuer la puissance de crête des données du type sans contraintes de retard qui sont émises en provenance dudit dispositif de télécommunications sans fil ou à destination de celui-ci.

7. Procédé selon la revendication 6, où ladite opération de transmission desdites données sur ledit canal de ladite cellule adjacente en provenance du dispositif de télécommunications sans fil (108) de ladite cellule locale comprend la transmission des données du type sans contraintes de retard depuis une station de base (105) d'une cellule locale à destination d'un dispositif de télécommunications sans fil de ladite cellule adjacente.

8. Dispositif de télécommunications (108) conçu pour transmettre des données dans un système de télécommunications (100), ledit dispositif de télécommunications (108) comprenant :
un récepteur (227) destiné à recevoir des signaux de télécommunications de la part dudit système de télécommunications (100) ;
un moyen servant à déterminer si les données à transmettre sont des données du type à contraintes de retard ;
un émetteur (223) servant à émettre lesdites données du type à contraintes de retard ; et
un moyen de commande (203) couplé audit émetteur afin de commander la transmission de données dans ledit système de télécommunications,
**caractérisé en ce que** le moyen de commande est conçu pour transmettre lesdites données du type sans contraintes de retard sur des canaux d'une cellule adjacente à destination de la cellule locale du dispositif de télécommunications.

9. Dispositif de télécommunications (108) selon la revendication 8, comprenant en outre :
un moyen (203) servant à augmenter l'énergie par bit des données du type sans contraintes de retard transmises depuis ledit dispositif de télécommunications sans fil ; et
un moyen (203) servant à maintenant la puissance de crête des données du type sans contraintes de retard qui sont transmises depuis ledit dispositif de télécommunications.

10. Dispositif de télécommunications selon la revendication 9, où ledit moyen (203) servant à augmenter l'énergie par bit comprend un moyen permettant de ralentir le débit des données du type sans contraintes de retard.

11. Dispositif de télécommunications (108) selon la revendication 10, où ledit moyen servant à ralentir le débit des données du type sans contraintes de retard comprend un moyen servant à réduire le taux de modulation.

12. Dispositif de télécommunications (108) selon la revendication 10, où ledit moyen de ralentissement du débit des données du type sans contraintes de retard comprend un moyen servant à modifier la technique de modulation.

13. Dispositif de télécommunications (108) selon la revendication 10, où ledit moyen de ralentissement du débit des données du type sans contraintes de retard comprend un moyen permettant d'augmenter la servitude de la technique de correction dite FEC.

14. Dispositif de télécommunications (108) selon la revendication 10, où ledit moyen de ralentissement du débit des données du type sans contraintes de retard comprend un moyen permettant d'augmenter le facteur d'étalement du spectre d'étalement.

15. Dispositif de télécommunications (108) selon l'une quelconque des revendications 10 à 14, où ladite opération de ralentissement du débit des données du type sans contraintes de retard comprend un moyen permettant d'augmenter la profondeur d'entrelacement.

16. Système de télécommunications (100) conçu pour transmettre des données, le système comprenant :
un dispositif de télécommunications sans fil placé à distance (108) qui possède un émetteur (223) et un dispositif (203) de commande du dispositif de télécommunications sans fil ;
une pluralité de stations de base (105), chacune desdites stations de base (105) étant placée dans une cellule (104) dudit système de télécommunications (100) et ayant des moyens qui permettent de déterminer si les données à transmettre sont des données du type sans contraintes de retard ainsi qu'un moyen servant à transmettre lesdites données du type sans contraintes de retard à destination du dispositif de télécommunications sans fil placé à distance (108) ; et
un dispositif (106) de commande de réseau couplé à ladite pluralité de stations de base afin de commander la transmission de données dans ledit système de télécommunications ;
**caractérisé en ce que** le dispositif (106) de commande du réseau est conçu pour transmettre lesdites données du type sans contraintes de retard en utilisant des canaux d'une station de base (105) d'une cellule adjacente à destination de la cellule locale du dispositif de télécommunications sans fil placé à distance (108).

17. Système de télécommunications (100) selon la revendication 16, où ledit dispositif (203) de commande du dispositif de télécommunications sans fil est conçu pour accroître l'énergie par bit des données du type sans contraintes de retard qui sont émises depuis ledit dispositif de télécommunications sans fil de ladite cellule locale à destination d'une cellule adjacente sélectionnée tandis qu'on maintient la puissance de crête des données du type sans contraintes de retard qui sont transmises depuis ledit dispositif de télécommunications sans fil.

18. Système de télécommunications selon la revendication 16, où chaque dite station de base possède un émetteur et un dispositif de commande de station de base, ledit dispositif de commande de station de base augmentant l'énergie par bit des données du type sans contraintes de retard qui sont transmises depuis ladite station de base à destination dudit dispositif de télécommunications sans fil placé à distance, tandis qu'on maintient la puissance de crête des données du type sans contraintes de retard qui sont transmises depuis ladite station de base.

19. Système de télécommunications selon la revendication 16, où ledit dispositif de commande du dispositif de télécommunications sans fil comprend un moyen permettant de ralentir le débit des données du type sans contraintes de retard.

20. Système de télécommunications selon la revendication 19, où ledit dispositif de commande du dispositif de télécommunications sans fil comprend un moyen permettant de réduire le taux de modulation.

21. Système de télécommunications selon la revendication 19, où ledit dispositif de commande du dispositif de télécommunications sans fil comprend un moyen permettant de changer la technique de modulation.

22. Système de télécommunications selon la revendication 19, où ledit dispositif de commande du dispositif de télécommunications sans fil comprend un moyen servant à augmenter la servitude de la technique de correction dite FEC.

23. Système de télécommunications selon la revendication 19, où ledit dispositif de commande du dispositif de télécommunications sans fil comprend un moyen permettant d'augmenter le facteur d'étalement du spectre d'étalement.

24. Système de télécommunications selon l'une quelconque des revendications 20 à 23, où ledit dispositif de commande du dispositif de télécommunications sans fil comprend un moyen permettant d'augmenter la profondeur d'entrelacement.
